(19) Europäisches Patentamt
European Patent Office
Office européen des brevets

(11) **EP 3 609 783 B1**

(12) **EUROPEAN PATENT SPECIFICATION**

(45) Date of publication and mention
of the grant of the patent:
**13.11.2024 Bulletin 2024/46**

(21) Application number: **18771879.6**

(22) Date of filing: **21.03.2018**

(51) International Patent Classification (IPC):
**B64C 27/24** *(2006.01)*    **B64C 27/22** *(2006.01)*
**B64C 29/00** *(2006.01)*    **B64D 27/04** *(2006.01)*
**B64D 37/04** *(2006.01)*

(52) Cooperative Patent Classification (CPC):
**B64C 27/24; B64C 27/22; B64C 29/0033;
B64D 37/04;** Y02T 50/40

(86) International application number:
**PCT/US2018/023594**

(87) International publication number:
**WO 2018/175606 (27.09.2018 Gazette 2018/39)**

(54) **VERTICAL TAKEOFF AND LANDING AIRCRAFT**

VERTIKAL STARTENDES UND LANDENDES FLUGZEUG

AÉRONEF À DÉCOLLAGE ET ATTERRISSAGE VERTICAUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.03.2017 US 201762474858 P**

(43) Date of publication of application:
**19.02.2020 Bulletin 2020/08**

(73) Proprietor: **Dzyne Technologies Incorporated
Irvine, CA 92618 (US)**

(72) Inventors:
• **PAGE, Mark, Allan
Irvine, CA 92618 (US)**
• **MCCUE, Matthew, Robert
Irvine, CA 92618 (US)**
• **GODLASKY, Robert, Anthony
Irvine, CA 92618 (US)**

(74) Representative: **Slingsby Partners LLP
1 Kingsway
London WC2B 6AN (GB)**

(56) References cited:
WO-A1-2016/109408     US-A- 1 550 106
US-A- 2 464 827      US-A- 2 511 025
US-A- 2 511 025      US-A- 2 585 468
US-A- 3 246 861      US-A1- 2012 248 259
US-A1- 2013 206 921   US-A1- 2015 028 155

**Description**

<u>CROSS REFERENCE TO RELATED APPLICATION</u>

This application claims the benefit of U.S. Provisional App. No. 62/474,858, filed March 22, 2017.

<u>FIELD OF THE INVENTION</u>

The invention relates generally to aircraft designs, and, more particularly, to aircraft designs that combine the features of a fixed wing aircraft and vertical takeoff and landing (VTOL) aircraft.

<u>BACKGROUND OF THE INVENTION</u>

Various aircraft designs attempt to combine the vertical takeoff and landing (VTOL) and hover capabilities of a helicopter with the increased speed and range capabilities of fixed wing aircraft. These hybrid designs reduce the footprint necessary for launch and recovery. However, they tend to be more complex than either helicopters or conventional take-off and landing aircraft, as they generally incorporate multiple propulsion systems, each used for a different flight mode. These designs can include "tail sitter" configurations, so named because the aircraft takes off and lands from a tail-down orientation. Other designs can include "nose sitter" configurations, so named because the aircraft takes off and lands from a nose-down orientation.

One example of a nose-sitter design includes a VTOL hybrid, which includes a conventional propeller for fixed wing flight and a folding rotor near the tail of the aircraft. These designs may have high hover efficiency; however, they also require complex mechanical systems and weigh more than other designs due to the requirement of two separate propulsion systems, one for each flight mode.

Other VTOL designs can include "tail sitter" configurations, so named because the aircraft takes off and lands from a tail-down orientation. Conversion from vertical to horizontal flight for these hybrid designs typically requires a configuration change and dedicated engines for each configuration. Prior solutions that combine VTOL and cruise performance compromise performance in both flight modes.

Document WO2016/109408 A1 discloses an aircraft with two wings and joined thruster propellers serving as rotary wings in helicopter mode and as fixed wings in airplane mode. The thrusters along the wingspans or at the wing tips drive both rotary wing rotation and airplane flight. Large-angle controlled feathering about the pitch change axes of the left and right wings and thrusters allows them to rotate, relative to each other, between facing and thrusting forward in the same direction for airplane flight or facing and thrusting oppositely for helicopter flight.

Document US2012/0248259 A1 discloses an aircraft for use in fixed wing flight mode and rotor flight mode. The aircraft can include a fuselage, wings, and a plurality of engines. The fuselage can comprise a wing attachment region further comprising a rotating support. A rotating section can comprise a rotating support and the wings, with a plurality of engines attached to the rotating section. In a rotor flight mode, the rotating section can rotate around a longitudinal axis of the fuselage providing lift for the aircraft similar to the rotor of a helicopter. In a fixed wing flight mode, the rotating section does not rotate around a longitudinal axis of the fuselage, providing lift for the aircraft similar to a conventional airplane. The same engines that provide torque to power the rotor in rotor flight mode also power the aircraft in fixed wing flight mode.

A VTOL airplane or UAV that uses the same propulsion for both flight modes would have many structural benefits, including reduced complexity and weight of the launch equipment and ease of operation in more remote locations, as well as numerous mission benefits that are enjoyed today by helicopters. These include hover-and-stare in urban-canyons and sit-and-stare for extended silent surveillance. Further, sit-and-wait operation allows the airplane or UAV to be pre-deployed to a forward area awaiting mission orders for remote launch of the aircraft. Upon receiving the mission order, the vehicle can launch without leaving any expensive launch equipment at the launch site.

Some existing VTOL designs suffer from poor endurance and speed. Forward flight efficiency may be improved by partial conversion to an aircraft like the V-22 but endurance issues remain. Many VTOL aircraft also require a high power-to-weight ratio. These aircraft may be used for high-speed flight if the aircraft is fitted with a special transmission and propulsion system. However, achieving high endurance requires efficiency at very low power. Thus, the challenge exists to create a virtual gearbox that equalizes power and RPM for VTOL and fixed wing flight achieving highly efficient cruise with the benefits of a vertical takeoff and landing configuration.

VTOL aircraft are runway independent so they can be deployed to undeveloped areas. Helicopters are the classical VTOL solution, but because of rotor limitations, they lack long range and high cruise speed. Range and speed are strengths for fixed-wing airplanes, conventional takeoff and landing (CTOL).

Hybrids have been explored to combine VTOL and efficient cruise. Existing solutions have much more complexity relative to helicopters and CTOL airplanes. Conversion from vertical to horizontal flight requires a configuration change, dedicated engines for each mission element, or very complex engines that do both tasks. Further, the solutions compromise VTOL and cruise performance significantly.

In addition, existing VTOL designs often sacrifice payload considerations to provide desirable flight performance, such as endurance. For example, other existing VTOL designs describe tail sitter configurations where the fuselage is oriented vertically when hovering or on the ground. The vertical fuselage makes it difficult to load and unload payloads, and also subjects the payloads to a 90-degree pitch change twice in a mission. A design is needed wherein this pitch change can be eliminated, while still maintaining a simple engine design to avoid for complicated configuration changes and more simplistic cruise performance.

It should, therefore, be appreciated that there exists a need for a VTOL aircraft with improved performance and payment capacity.

SUMMARY OF THE INVENTION

Briefly, and in general terms, an aircraft capable of fixed wing and rotor flight modes according to claim 1 is disclosed that is capable of vertical takeoff and landing (VTOL). The aircraft comprises a fuselage body having a longitudinal axis ($A_f$) and a plurality of wings affixed above the fuselage. The wings are mounted for both a fixed wing flight mode and for a rotor flight mode. The fixed wing flight mode is defined as flight in which said wings are maintained rotationally stationary relative to the axis of rotation ($A_r$). The rotor flight mode is defined as flight in which said wings rotate about the axis of rotation ($A_r$).

More particularly, the plurality of engines secured to said wings, including a first engine secured to said first wing and a second engine secured to said second wing. The wing attachment assembly comprises a central support to which the plurality of dual-purpose wings attach. The central support includes a hopper tank for providing fuel to the plurality of engines. The fuselage body includes a fuel tank operatively coupled to the hopper tank to provide fuel thereto.

In exemplary embodiments in accordance with the invention, the aircraft can be provided in manned or unmanned configurations (UAV).

The wing attachment assembly is attached to the fuselage body in an intermediate region thereof above the fuselage body.

In another detailed aspect of an exemplary embodiment, the plurality of wings consist of a pair of wings having a wingspan greater than the length of the fuselage body.

In another detailed aspect of an exemplary embodiment, the plurality of engines are each secured to said wings at an equalizing position along the semi-span of each wing.

A method of an aircraft transitioning between fixed wing mode and rotor flight mode according to claim 10 is also provided.

For purposes of summarizing the invention and the advantages achieved over the prior art, certain advantages of the invention have been described herein. Of course, it is to be understood that not necessarily all such advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other advantages as may be taught or suggested herein.

All of these embodiments are intended to be within the scope of the invention herein disclosed as long as they not depart from or are further developments of the scope of the appended claims. These and other embodiments of the present invention will become readily apparent to those skilled in the art from the following detailed description of the preferred embodiments having reference to the attached figures, the invention not being limited to any particular preferred embodiment disclosed but only by the appended claims.

BRIEF DESCRIPTION OF THE DRAWINGS

These and other features, aspects, and advantages of the present invention will now be described in connection with a preferred embodiment of the present invention, in reference to the accompanying drawings. The illustrated embodiments, however, are merely examples and are not intended to limit the invention, the invention being defined by the appended claims.

FIG. 1 is a perspective view of an aircraft in accordance with the invention that converts between rotor flight mode and fixed wing flight mode, shown in fixed wing flight mode.

FIG. 2 is a perspective view of the aircraft of FIG. 1, depicted in rotor flight mode.

FIG. 3 is a front view of the aircraft of FIG. 1, depicted in fixed wing flight mode.

FIG. 4 is a front view of the aircraft of FIG. 1, depicted in rotor flight mode.

FIG. 5 is a graphical and pictorial representation of a preferred method of converting an aircraft between a rotor flight mode and configuration to a fixed wing flight mode and configuration.

FIG. 6 is a graphical and pictorial representation of a preferred method of converting an aircraft between a fixed wing flight mode and configuration to a rotor flight mode and configuration.

FIG. 7 is a perspective view of a second embodiment of an aircraft in accordance with the invention, comprising aerodynamic surfaces to compensate for rotor torque.

FIG. 8 is a perspective view of a third embodiment of an aircraft in accordance with the invention, depicting a tail rotor.

FIGS. 9A & B are a side view and a perspective view of a fourth embodiment of an aircraft in accordance with the invention, depicting fuselage-mounted fuel tank and hopper tanks in the rotor.

FIGS. 10A & B are a side view and a perspective view of a fifth embodiment of an aircraft in accordance with the invention, depicting a displacement bearing in the rotor assembly that isolates spike moments and vibration from the fuselage.

FIGS. 11A - E are perspective views of the aircraft in accordance with the invention, depicting the transition from forward flight mode to rotor-flight mode and vice-versa.

## DETAILED DESCRIPTION OF EXEMPLARY EMBODIMENTS

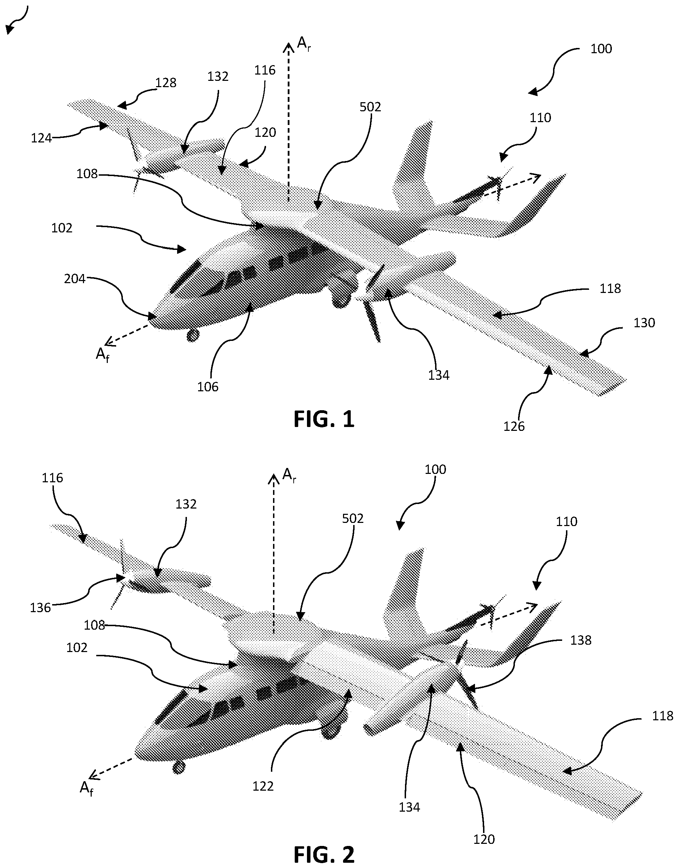

With reference now to the drawings, and particularly FIGS. 1 and 2, there is shown an aircraft 100 that includes multi-purpose wings 116, 118 operable in a rotor flight mode (FIG. 2) and a fixed wing flight mode (FIG. 1). The wings are rotatably coupled to a central support 502 of a wing attachment assembly 108 above a fuselage 102. The central support defines an axis of rotation ($A_r$) that is transverse to a longitudinal axis ($A_f$) of the fuselage.

When the aircraft is in rotor flight mode, the wings rotate as a rotor above the fuselage. The rotation of the wings acts similarly to the rotor of a traditional helicopter, providing vertical thrust to vertically propel the aircraft and maintain a hovering altitude. However, the rotation of the wings is propelled by engines 132, 134 mounted on the wings, rather than an engine mounted within the fuselage as in traditional helicopter designs. When in fixed wing flight mode, the wings are oriented such that the engines face the same direction to provide the thrust required to power the aircraft in fixed wing flight.

As such, this arrangement provides the features of a rotor-flight aircraft and a fixed-wing aircraft, while reducing performance losses due to the weight requirements of complex mechanical machinery needed for configuration changes. Moreover, multiple propulsion systems are not required for flight in more than one flight mode.

This exemplary embodiment also allows for a wide variety of payloads to be carried, as the payload compartment size is not related to the rotor geometry, and is largely decoupled with the horizontal fuselage. Embodiments of the invention can include features such as but not limited to improved payload capacity, vertical take-off and landing (VTOL) capability, efficient hover, high speed, and long-range endurance in a single flight. Additionally, embodiments of the invention include aircraft in manned or unmanned configurations (UAV).

With continued reference to FIGS. 1 and 2, the aircraft 100 is shown in fixed wing flight mode, similar to that of a conventional airplane, such as a Piper Seneca or Beech King-Air. The aircraft 100 comprises a fuselage main body 102 having nose 204, payload compartment 106, wing attachment assembly 108, and tail section 110. The wings attach to a top portion of the fuselage.

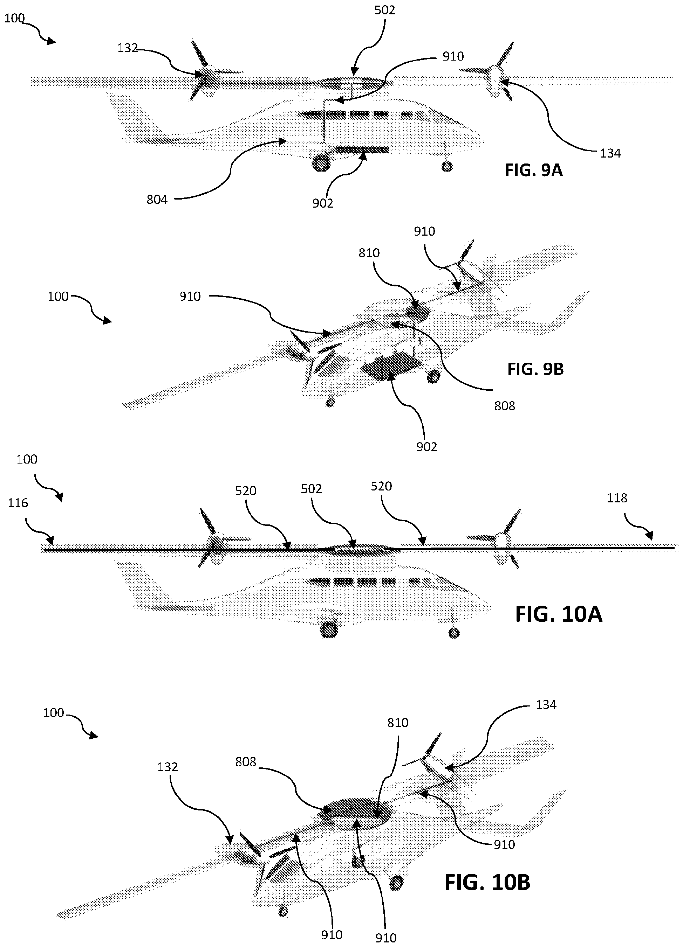

The payload compartment 106 is located within the fuselage 102 between the nose 204 and tail section 110. The interior of the fuselage 102 comprises a volume, which contains crew seating, the payload compartment, as well as fuel tanks (shown in FIGS. 9-10) or other mission specific equipment.

The wing attachment assembly 108 comprises the central support 502 to which the wings 116, 118 preferably attach, with one wing on each side thereof, spaced equiangularly about the central support. The wings 116, 118 and central support 502 rotate around the axis of rotation (Ar) when the aircraft 100 is in rotor flight mode (FIG. 2). The central support 502 is preferably locked in place to prevent rotation about axis of rotation (Ar) when the aircraft is in fixed wing flight mode (FIG. 1).

The wings 116, 118 may also comprise one or more control surfaces 120, 122 to control the attitude of the aircraft while in both fixed wing and in rotor flight modes. These control surfaces may be controlled by servos located within the fuselage 102 of the aircraft 100. Alternatively, servos can be disposed in the wings.

In a preferred embodiment, the wings may comprise a symmetric airfoil. The wings 116, 118 each have a leading edge 124, 126, and a trailing edge 128, 130. The wings can have a greater chord length, or leading edge to trailing edge, closer to the fuselage. Alternatively, the wings may have substantially the same chord length along the span of the wing from wing tip to wing tip.

Engine 132, 134 are secured to each wing 116, 118. In other embodiments, one or more engines may be secured to each wing 116, 118. In a preferred embodiment, the engines 132, 134 of the aircraft 100 are aligned substantially parallel with a longitudinal axis of the fuselage with the propellers 136, 138 configured to pull the aircraft 100 through the air when the aircraft 100 is in fixed wing flight, as depicted in FIG. 1. In other embodiments, the engines 132, 134 and propellers 136, 138 may be configured in a push-type configuration in which the propellers 136, 138 are oriented toward the tailing edge 128, 130 of the wings 116, 118 to push the aircraft 100 rather than to pull the aircraft 100 when the aircraft 100 is flying in a fixed wing flight mode. A "pusher" style configuration where the engines and propellers are oriented to push the aircraft 100 through the air.

With continued reference to FIGS. 1 and 2, the engines 132, 134 are secured to the wings 116, 118 (not the fuselage 102). As such, the location of the engines 132, 134 on the wings 116, 118 eliminates the need for extension shafts from the fuselage to the propellers. Extension shafts typically connect an engine mounted within or directly on the fuselage via a gearbox or other linkage to the propellers on the wing. Locating the engines within or directly on the fuselage typically also requires a central gearbox located within the fuselage. By eliminating the extension shafts and the central gearbox in a preferred embodiment, the weight of the aircraft 100 may be decreased, allowing for greater payload capacity, longer range, and endurance, among other benefits conceivable by those skilled in the art.

In other embodiments, engines 132, 134 may be secured at any point on the rotating section comprising the wings 116, 118 and central support 502. In the illustrated embodiment, two engines are depicted. Additional embodiments may have more numbers of engines depending on mission requirements; other aircraft design considerations, or other considerations known to those skilled in the art.

FIG. 2 further illustrates that, in a preferred embodiment, the engines 132, 134 are attached to the wings 116, 118 at a position an equal distance to either side of the central support 502. Locating the engines 132, 134 in this balanced orientation may provide benefits of balance and stability to the aircraft. Additionally, the engines 132, 134 are preferably secured to the wings 116, 118 at an equalizing position along the semi-span of each wing, defined as the distance along the wing 112 or 114 from the wing attachment assembly 108 to the wing tip 116 or 118.

When the engines 132, 134 are located at the equalizing position in a preferred embodiment, the thrust of the engines 132, 134 and the flight speed of aircraft 100 when the aircraft 100 is flying in a fixed wing flight mode desirably equal the torque and rpm, or rotations per minute, required by the aircraft 100 when the wings rotate around a longitudinal axis of the rotor 102 when the aircraft 100 is operating in a rotor flight mode. In a preferred embodiment, the torque demands of the wings 116, 118 when acting as a rotor are matched to the in-flight demands of the aircraft 100 when flying in fixed wing mode, using the same engines 132, 134 and propellers 136, 138. Locating the engines 132, 134 at the point where these demands are matched may also allow the wing tip 116, 118 speed to approach sonic (when the wings 116, 118 are acting as a rotor in rotor flight mode) while keeping the blades of the propellers 136, 138 well under sonic. Locating the engines 132, 134 at the point where these forces and requirements equalize preferably eliminates the need for complex gearboxes and other heavy equipment that may decrease the long-range endurance capabilities of the aircraft. Additional discussion of the determination of this point where these forces and requirements equalize is included below.

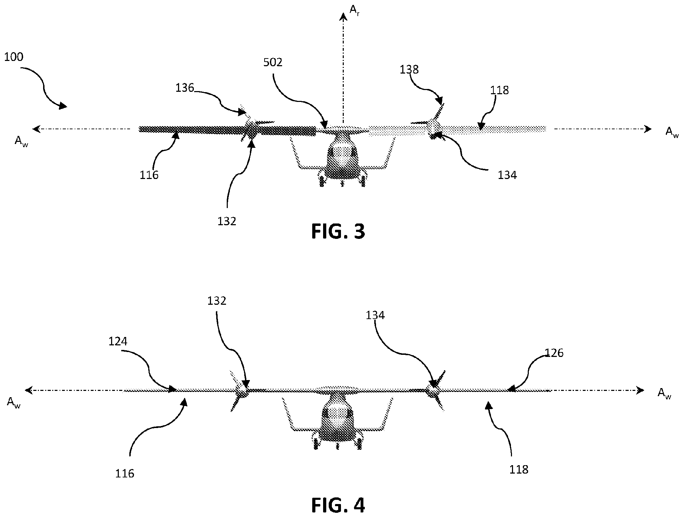

With reference now to FIG. 3, the aircraft 100 is depicted in rotor flight mode. The engines 132, 134 face in opposing directions, to cause wings to rotate about the axis of rotation (Ar). The wings 116, 118 are mounted to the central support 502 in a manner that enables each wing to rotate independently about its span-wise axis (length) ($A_w$). As such, the wings and the engines can provide variable pitch, in both flight modes. The rotation of the wings 116, 118 may preferably be achieved by servos or actuators located within the central support 502. Also, the rotation of at least one wing is used to transition between rotor flight and fixed wing flight. In the exemplary embodiment, one wing can rotate at least 180 degrees about its span-wise axis ($A_w$). During start-up and shutdown, the wings can be rotated so the propeller blades 136, 138 are not below the surface swept by the wings. This affords extra safety from the spinning propellers.

FIG. 4 depicts a front view of the aircraft 100 in fixed-wing flight mode, in which the leading edges 124, 126 of the wings 116, 118 face forward. Additionally, engines 132, 134 may also rotate relative to the wings 116, 118 around a span or lengthwise axis ($A_w$) of the wings. The rotation of engines 132, 134 around a span-wise axis of the wings 116, 118 may be in addition to the rotation of wings 116, 118 described above. The rotation of engines 132, 134 may be between 0 and 20 degrees, desirably between 0 and 10 degrees, or more desirably between 0 and 5 degrees.

Preferably, the wings 116, 118 each have at least one spar. A spar runs lengthwise along the internal or external span of the wing from connection with the central section 502 to the wing tip to provide structural rigidity. At least one spar of each wing 116, 118 attaches to the central support 502 of wing attachment assembly. FIG. 10a depicts one spar 520 of wing 116 connected to central support 502. The wings may rotate about the spar or a span-wise or wingtip-to-wingtip axis ($A_w$) of the wing to position the wings 116, 118 for hover or vertical flight. Desirably, spar 520 extends at least to the point of attachment of engine 132 on wing 116 to provide structural rigidity to the wing. Wing 118 may be attached to wing attachment assembly via a second spar 520. Wing 118 is preferably able to rotate as described above about the spar 520 to orient engine 134 to a new direction required to power rotation of wing 118 around a longitudinal axis ($A_r$). Desirably, wing 118 also rotates about a second spar to achieve the orientation of engine and propeller 138 as depicted in FIG. 10a.

The engines 132, 134 are attached to the wings 116, 118 such that the rotating inflow speed of air to the engines 132, 134 when the wings 116, 118 are acting as a rotor is substantially similar to the cruise inflow speed of air to the engines 132, 134 when the aircraft 100 is flying in fixed wing mode. This preferably allows the propellers 136, 138 and the engines 132, 134 of the aircraft 100 to be optimized for efficient cruise. The aircraft 100 also relies on the same engines 132, 134 as those used for vertical takeoff and landing and hovering flight when the aircraft 100 is in fixed wing flight. In a preferred embodiment, there is no torque-to-ground force as is found with traditional helicopter designs, so no tail rotor is needed.

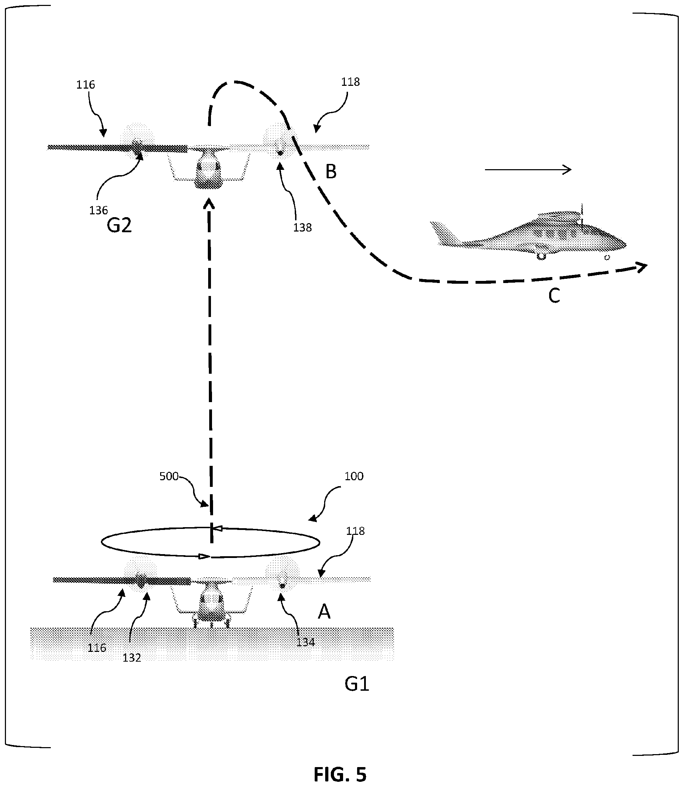

As shown in FIG. 5, takeoff and rotor flight is achieved when the wings 116, 118 are preferably oriented substantially parallel to the ground with the engines 132, 134 facing in opposite directions. FIG. 5 depicts one embodiment of the invention in which one engine 134, 136 is attached to each wing 116, 118; however, a different number of engines may be attached to each wing. The application of power via the rotation of the propellers 136, 138 attached to each engine 132, 134 causes the wings 116, 118 to rotate around a longitudinal axis 500 of the rotor 502 similar to a helicopter rotor in the direction indicated in FIG. 5. The pitch, or angle of attack, of each wing 116, 118 may be altered at the same time (known in the art as collective pitch) or may be changed depending on the position of each wing 116, 118 as it rotates (known in the art as cyclic pitch). These pitch changes may be provided by control surfaces on the wings 116, 118 such as flaps, tabs with free-to-pitch wing bearings, or dedicated servos. As depicted in FIG. 5, the engines 132, 134 are attached to the wings 116, 118 at a position where the torque demands of the rotor created by the rotation of the wings 116, 118 about a longitudinal axis of the rotor 102 are matched to the in-flight demands of the aircraft 100 when the wings 116, 118 do not rotate relative to the fuselage in fixed wing flight mode. In a preferred embodiment, the aircraft 100 uses the same engines 132, 134 and propellers 136, 138 for flight in fixed wing mode and rotor flight mode. This configuration may also allow the rotor tips 116, 118 to approach sonic speed while keeping the propellers 136, 138 well under sonic.

The same engines 132, 134 and propellers 136, 138 that provide the thrust necessary to turn the wings 116, 118 like a rotor when the aircraft 100 is in rotor flight mode also provide between 50% and 100% of the thrust necessary to fly the aircraft 100 in fixed wing flight mode. In other embodiments, engines 132, 134 desirably provide between 75% and 100% of the thrust necessary to fly the aircraft 100 in fixed wing flight mode, and more desirably provide between 90% and 100% of the thrust necessary to fly the aircraft 100 in fixed wing flight mode. In some embodiments, at least 50% of the thrust necessary to fly aircraft 100 in fixed wing flight mode is provided by the same engines 132, 134 that power the aircraft in rotor flight mode, while in other embodiments desirably at least 75% of the necessary thrust is provided by the same engines 132, 134, while in still other embodiments more desirably at least 90% of the necessary thrust is provided by the same engines 132, 134.

Each wing 116, 118 may comprise a spar 802, 804 that runs lengthwise through the wing from the point of attachment with the fuselage 102 to at least the point of attachment of engine 132, 134 with wing 116, 118. Each spar 802, 804 provides structural rigidity for each wing 116, 118, as may be appreciated by those skilled in the art.

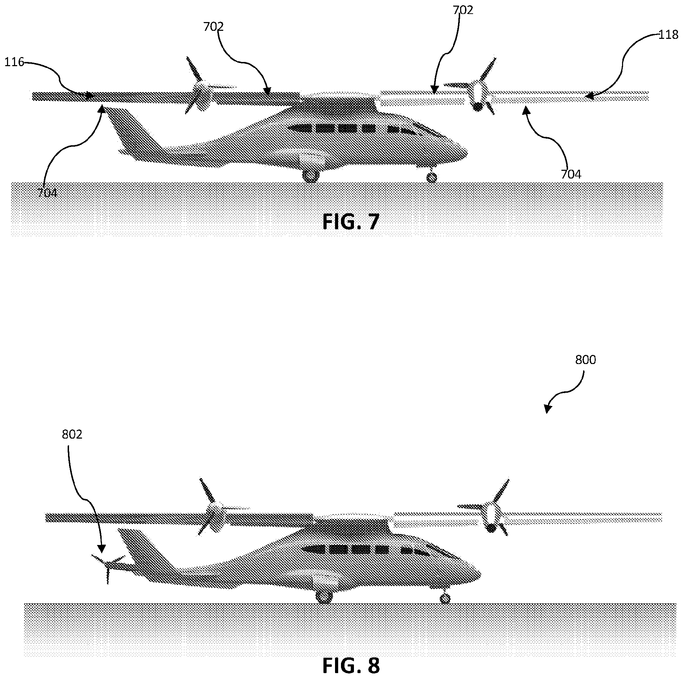

In a preferred embodiment, the spar of each wing is attached to central support 502. The spars are preferably attached to the central support 502 such that each wing 116, 118 is allowed to rotate about the axis ($A_w$) defined by the spar such that the leading edge 124 of one wing and the leading edge 126 of the other wing face in substantially opposite directions, as shown in one embodiment in FIG. 8. The rotation of the wings 116, 118 about their spars will also result in the engines 132, 134 attached to each wing to face in substantially opposite directions. Power generated by the engines 132, 134 will turn the propellers 136, 138, which will produce thrust causing the rotation of the wings 116, 118 about an axis of rotation ($A_r$).

A preferred transition to fixed wing flight is shown in FIG. 5. At initiation position A, the aircraft 100 is shown with the engines and propellers oriented in opposite directions. The aircraft may be on the ground G1 awaiting take off or may be hovering or flying in rotor flight mode above the ground G2. Between positions A and B, the aircraft preferably climbs to a desired height above ground level. At both positions A and B, the wings 116, 118 are rotating about the rotor of the aircraft to provide thrust for rotor flight. At throttle down position B, the aircraft is preferably throttled down from a climb to hover while in rotor flight mode. Between throttle down position B and fixed-wing position C, the aircraft preferably begins to rotate a wing 138 by 180 degrees to align with the second wing 136 which transitions the aircraft to a fixed wing orientation in which the engines 132, 134 face in substantially the same direction. This direction being the desired direction of travel for flight as a fixed wing or conventional airplane.

The transition can be accomplished while simultaneously reducing engine throttle. The reduction in throttle desirably reduces rotor speed (the rotation of the wings acting as a rotor) substantially to zero. At fixed wing flight mode position C, the aircraft has fully transitioned from a rotor flight mode to a fixed wing flight mode, meaning that the wings are no longer rotating. The central support may be locked to prevent rotation but this is not required. Additionally, the engines preferably face substantially in the direction of travel. At fixed wing flight mode, engine throttle is preferably advanced, which accelerates the aircraft allowing for traditional fixed wing flight. Once sufficient airspeed is developed, the aircraft is flying "on-the-wing" similar to that of a conventional airplane and may be controlled with conventional tail surfaces.

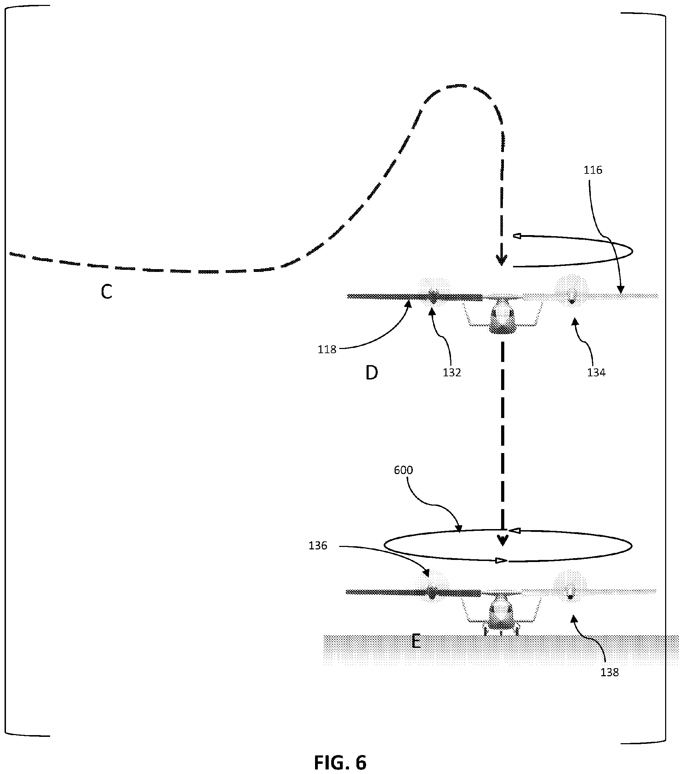

FIG. 6 depicts a method of transitioning from fixed wing flight to rotor flight. At fixed wing flight mode position C, the aircraft is oriented for flight in fixed wing mode, as described with respect the same flight mode and position in FIG. 5. Throttle is reduced, and a one wing 116 is rotated 180 degrees to face an opposite direction from wing 118. Thereafter, throttle is increased to initiate rotor-wing flight mode. At position D, the aircraft's 100 configuration is changed from that required for fixed wing flight to that required for rotor flight, during which time the wings 116, 118 rotate in opposite directions 600 such that the engines 132, 134 and propellers 136, 138 face in opposite directions. At rotor wing flight mode position D, the wings begin to spin around the axis of rotation (Ar) due to the torque generated by the engines 132, 134 attached to the wings 116, 118, which now face in opposite directions. The rotor speed at rotor-wing flight mode position D is preferably increased beyond the speed required for hover flight. Finally, between rotor wing flight mode position D and fully transitioned position E, the engines may be throttled down for stable descent and landing. However, actual landing of the aircraft 100 at this point may not be required if mission considerations and requirements require the aircraft to maintain hover flight at a specific altitude or to complete other aerial maneuvers while in vertical flight mode.

With reference now to FIG. 7, the wings 116, 118 include control surfaces 702, 704. The control surfaces can be used to generate aerodynamic forces to compensate for torque forces generated in rotor flight mode. In FIG. 8, an aircraft 800 includes a tail rotor 802 to compensate for torque forces generated in rotor flight mode.

With reference now to FIGS. 9A & B, the aircraft 100 includes a fuel tank 902 mounted in the fuselage 804 coupled to hopper tanks 808, 810 in the wings. The hopper tanks feed the engines 132, 134. In use, fuel 910 can be transferred from the fuel tank 902 to the hopper tanks when the rotor is stopped. The hopper tanks can feed the engines 132, 134 while in rotor mode, as shown in FIG. 10B.

With reference now to FIGS. 10A & B, the aircraft can include a displacement bearing assembly in the central support 502. The bearing assembly is configured to isolate rotor spike moments and vibration from the fuselage 804.

As mentioned above with regard to FIG. 2, the torque demands of the wings 116, 118 when acting as a rotor are desirably matched to the in-flight demands of the aircraft 100 when flying in fixed wing mode, using the same engines 132, 134 and propellers 136, 138. The engines 132, 134 are desirably positioned at a point on the wings 116, 118 where these requirements are substantially equalized. As discussed above, these requirements may have a difference between them of between 0% and 50%, desirably between 0% and 25%, or more desirably between 0% and 10%. In some embodiments, the difference between these requirements is desirably no more than 25% or more desirably no more than 10%. The following discussion describes a preferred method to calculate the position on wings 116, 118 where the engines 132, 134 are attached to substantially equalize these requirements. The exact values used in the calculation are for example purposes and are not intended to limit the calculation or the invention in any way.

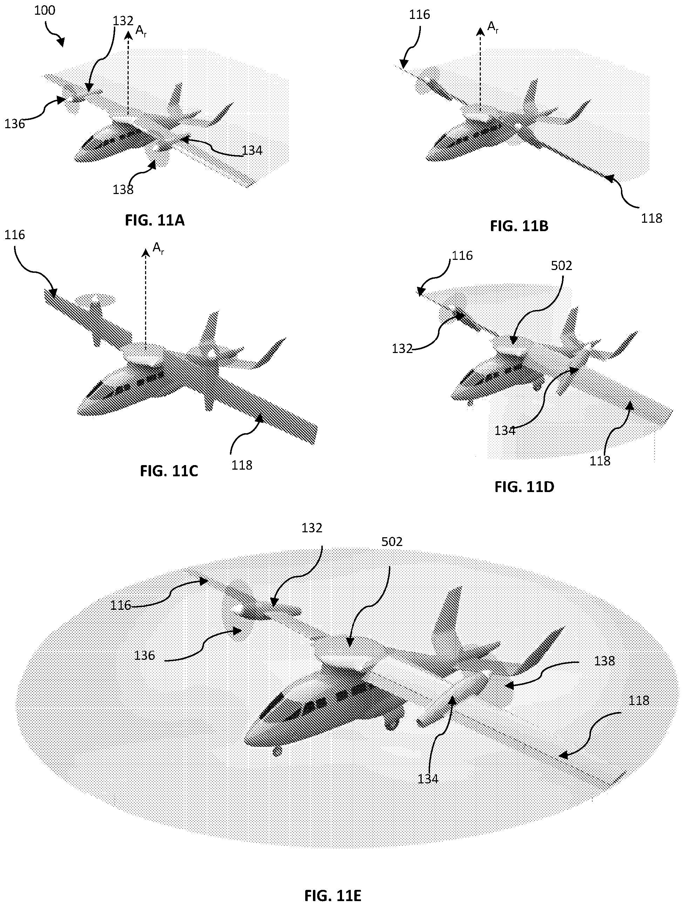

With reference now to FIGS. 11A-E, the transition of the aircraft 100 from fixed-wing-flight mode to rotor-flight mode is depicted. FIG. 11A shows the aircraft 100 in fixed-wing flight. Both engines 132, 134 are facing the same direction (forward), and the propellers 136, 138 provide the propulsive power to move the aircraft 100 forward. FIG. 11B shows the wings 116, 118 as they begin their transition from fixed-wing-flight mode, to rotor-flight mode. The wings' 116, 118 incidence is increased symmetrically, as shown, causing the aircraft 100 to pull-up and decelerate. FIG. 11C shows the wings 116, 118 once they have been rotated to a transition orientation. In the transition orientation, chord axis of each wing is aligned with the axis of rotation ($A_r$). In the exemplary embodiment, wings are oriented 90 degrees relative to the longitudinal axis in the transition orientation, and the aircraft 100 is at a minimum airspeed.

FIG. 11D shows the wings 116, 118 as they are rotated from the transition orientation. One wing 116 is rotated forward, and the other wing 118 is rotated backward, such that engine 132 is oriented in a forward facing direction and engine 134 is oriented in a rearward facing direction, initiating the spin of the central rotary 502. FIG. 11E shows the aircraft 100 in rotor-flight mode. The wings 116, 118 have been rotated such that the engines 134, 136 and propellers 136, 138 face opposite directions. The wings 116, 118 have been rotated to their hover incidence, resulting in a steady spin of the wings and the central rotary 502 about the $A_r$ axis.

The table below provides a list of abbreviations used in the example calculations that follow:

| VTOL | Vertical Takeoff and Landing |
|---|---|
| SHP | Shaft horsepower (hp) |
| PROP_Efficiency | Propulsive Power/Input Power = Thrust * Vtrue/SHP at a given flight condition |

(continued)

| GW | Gross Weight (lbs) |
|---|---|
| ROC | Rate of Climb (feet per minute of fpm) |
| Ceiling | Maximum operating altitude of the airplane, typically defined as max power ROC = 100 fpm |
| V and Vtrue | True airspeed (feet per second or fps) |
| V@prop | True airspeed at propeller station in vertical flight mode (fps) |
| VCruise | True airspeed of aircraft in fixed wing flight mode (fps) |
| $\rho$ | Air density (slugs/ft$^3$) |
| RPM | Revolutions per minute (1/min.) |
| LID | Fixed wing flight lift to drag ratio |
| AR | Wing aspect ratio (wingspan$^2$/wing area) |
| CT | Thrust Coefficient, defined as $CT = \dfrac{\text{Thrust}}{\rho * \left(\frac{\text{RPM}}{60}\right)^2 * \text{Diameter}^4}$ |
| Engine%Semispan | Location of engine on semispan of wing, expressed as a percentage |

It has been well established in the art that VTOL power required follows this relation:

$$VTOL\_SHP_{reqd} \cong \frac{\left(RotorLift_{reqd}^{1.5}\right)}{\left[21 * RotorDiameter * \sqrt{\frac{\pi}{4}}\right]}$$

Where VTOL_SHP$_{reqd}$ is the Shaft horsepower required for vertical take-off and landing.
Assuming that the aircraft requires 20% excess lift capability in the rotor the equation for VTOL_SHPreqd becomes:

$$VTOL\_SHP_{reqd} \cong \frac{\left(1.2 * GW\right)^{1.5}}{\left[21 * RotorDiameter * \sqrt{\frac{\pi}{4}}\right]}$$

For an airplane, the SHP$_{reqd}$ is set by the climb or takeoff requirement of the airplane. Since takeoff is not required when the aircraft is in fixed wing flight mode, climb is the key consideration. Initial climb rate at takeoff altitude is a good surrogate for the ceiling capability of an airplane. The greater the ROC, or rate of climb, of an aircraft is at low altitude, the higher the ceiling, or the maximum altitude the aircraft may achieve. For many VTOL vehicles, a typical ceiling is 15,000 ft. This ceiling is approximately equivalent to a sea level ROC of 1,500 fpm (or feet per minute) for a long range or high endurance airplane. Using the classical climb equation we can solve for the SHP required when the aircraft is climbing in fixed wing flight mode.

$$CLIMB\_SHP_{reqd} = \left(\frac{VCruise * GW}{PROP\_Efficiency * 550}\right) * \left[\frac{\left[\frac{ROC_{reqd}}{60}\right]}{V} + \left(\frac{L}{D}\right)^{-1}\right]$$

If the wings are used as the rotor, the rotor diameter equals the wingspan.
Further, if the flight engines are used to power the rotor, the propeller efficiency must be included in the calculation to determine the engine SHP required for VTOL.

For VTOL, the equation becomes:

$$ENGINE\_SHP_{reqd} \cong \frac{(\ 1.2\ *\ GW\ )^{1.5}}{\left[PROP\_Efficiency\ *\ 21\ *\ RotorDiameter\ *\ \sqrt{\frac{\pi}{4}}\ \right]}$$

For flight in fixed wing mode the equation becomes:

$$ENGINE\_SHP_{reqd} = \frac{VCruise * GW}{PROP\_Efficiency * 550} * \left[\frac{\left[\frac{ROC_{reqd}}{60}\right]}{V} + \left(\frac{L}{D}\right)^{-1}\right]$$

Therefore;

$$\frac{(\ 1.2\ *\ GW\ )^{1.5}}{PROP\_Efficiency\ *\ 21\ *\ RotorDiameter\ *\ \sqrt{\frac{\pi}{4}}}$$

$$= \frac{VCruise\ *\ GW}{PROP\_Efficiency\ *\ 550} * \left[\frac{\left[\frac{ROC_{reqd}}{60}\right]}{V} + \left(\frac{L}{D}\right)^{-1}\right]$$

As an illustrative example only, for a very efficient 5000 lb airplane, assume the following:

| GW = 5000 lbs |
| --- |
| PROP_Efficiency = 80% |
| L/D = 20 |
| Vtrue = 300 fps |
| ROCreqd = 1,500 fpm |

Solving for the RotorDiameter or wingspan when the engine power for VTOL equals the engine power for climb will result in a preferably balanced design in which the wings are utilized as the rotor for rotor flight.

$$RotorDiameter = \frac{\left(\frac{1}{2}*GW\right)^{1.5}}{\left[PROP\_Efficiency*21*\sqrt{\frac{\pi}{4}}\right]*\left[\frac{VCruise*GW}{PROP\_Efficiency*550}\right]\left[\frac{\left[\frac{ROC_{reqd}}{60}\right]}{VCruise}+\left(\frac{L}{D}\right)^{-1}\right]}$$

In this example only, RotorDiameter = wingspan = 68.7 ft.

The previous calculations matched engine power provided by a propeller for vertical and hovering flight and fixed wing flight climb. However, to eliminate the need for mechanical gearing between the flight modes, the engine is desirably secured laterally on the wing to provide the desired rotor torque at the rotor RPM.

Assuming the aircraft when it is in fixed wing configuration has an aspect ratio (AR) of 20 the RPM and torque required may be determined.

Near an advance ratio of zero (hover) an AR = 20 wing has these properties.

RotorThrust Coefficient, CT = 0.194

$$Thrust = \left(CT * \rho * \frac{RPM}{60}\right)^2 * RotorDiameter^4$$

$$1.2 * GW = \left(CT * \rho * \frac{RPM}{60}\right)^2 * RotorDiameter^4$$

Solving for the rotor rotations per minute results in 46 rpm for the wings when they act as a rotor. Recall:

$$VTOL\_SHP_{reqd} \cong \frac{(1.2 * GW)^{1.5}}{\left[21 * RotorDiameter * \sqrt{\frac{\pi}{4}}\right]}$$

Thus VTOL_SHP$_{reqd}$ = 454.7 hp.
Therefore:

$$Torque = \frac{VTOL\_SHP * 550}{2 * \pi * \frac{RPM}{60}}$$

and Torque = 41,623 ft-lbs.
Assuming the thrust of the engines in VTOL or vertical/hovering flight is defined as:

$$Thrust = \frac{PROP\_Efficiency * SHP * 550}{V@prop}$$

Where V@prop is the relative wind at the engine station on the rotating wing, given by:

$$V@prop = \left(\frac{RPM}{60}\right) * \pi * Engine\%Semispan * RotorDiameter$$

Then V@prop = 82.7 fps.
For engines secured at 50% semispan the available thrust is:

$$Total\_Thrust\_Avail = \frac{PROP_{Efficiency} * SHP * 550}{(V@prop)}$$

Solving the equation results in Total Thrust Available = 2,425 lbs.
From the Rotor Torque Equation:

$$Torque = TotalThrust_{reqd} * Y$$

Rearranged:

$$TotalThrust_{reqd} = \frac{Torque}{Y}$$

Since the rotor diameter, or total wingspan, is 68.7 ft, as calculated above for this example only, an engine located at 50% semi-span has a lever arm (Y) of 17.16 ft.

Therefore, in this example, the Total Thrust Required is 2,425 lbs, which equals the Total Thrust Available as calculated above.

The equivalence of the Total Thrust Available and the Total Thrust Required illustrates that for this example, a balanced design was achieved without needing a gearbox.

It should be appreciated from the foregoing that the present invention provides an aircraft capable of fixed wing and rotor flight modes is disclosed that is capable of vertical takeoff and landing (VTOL). The aircraft comprises a fuselage body having a longitudinal axis ($A_f$) and a plurality of wings affixed above the fuselage. The wings are mounted for both a fixed wing flight mode and for a rotor flight mode. The fixed wing flight mode is defined as flight in which said wings are maintained rotationally stationary relative to the axis of rotation ($A_r$). The rotor flight mode is defined as flight in which said wings rotate about the axis of rotation ($A_r$).

Although the invention has been disclosed in detail with reference only to the exemplary embodiments, those skilled in the art will appreciate that various other embodiments can be provided without departing from the scope of the invention. Accordingly, the invention is defined only by the claims set forth below.

**Claims**

**1.**    An aircraft (100) capable of fixed wing and rotor flight modes, comprising:

a fuselage body (102) defining a longitudinal axis (Af), the fuselage body having a nose (204) and a tail (110), a wing attachment assembly (108) coupled to the fuselage body for rotation about an axis of rotation (Ar) transverse to the longitudinal axis (Af);
a plurality of dual-purpose wings (116, 118), including a first wing (116) and a second wing (118), rotatably mounted to said wing attachment assembly above the fuselage body for a fixed wing flight mode and for a rotor flight mode, in which the fixed wing flight mode is defined as flight in which said wings are maintained rotationally stationary relative to the axis of rotation (Ar) and the rotor flight mode is defined as flight in which said wings rotate about the axis of rotation (Ar); and
a plurality of engines secured to said wings, including a first engine (132) secured to an intermediate region of said first wing (116) and a second engine (134) secured to an intermediate region of said second wing (118);
wherein the wing attachment assembly (108) comprises a central support (502) to which the plurality of dual-purpose wings (116, 118) attach;
wherein the central support (502) includes a hopper tank for providing fuel to the plurality of engines (132, 134);
wherein the fuselage body (102) includes a fuel tank (902) operatively coupled to the hopper tank to provide fuel thereto; and
wherein the aircraft is configured such that the fuel is transferred from the fuel tank to the hopper tank when the wing rotation about the axis of rotation (Ar) is stopped.

**2.**    The aircraft (100) of claim 1, wherein the plurality of dual-purpose wings (116, 118) consist of a pair of wings having a wingspan greater than the length of the fuselage body (102).

**3.**    The aircraft (100) of claim 1, wherein the wing attachment assembly (108) is attached to the fuselage body (102) in an intermediate region thereof, such that in rotor flight mode the plurality of wings (116, 118) rotate about the axis of rotation (Ar) above the nose (204) and the tail (110) of the fuselage body.

**4.**    The aircraft (100) of claim 1, wherein the axis of rotation (Ar) is perpendicular to the longitudinal axis (Af).

**5.**    The aircraft (100) of claim 1, wherein the plurality of engines (132, 134) are each secured to said wings (116, 118) at an equalizing position along the semi-span of each wing.

**6.**    The aircraft (100) of claim 1, wherein the wing attachment assembly (108) is attached to the fuselage body (102) in an intermediate region thereof above the fuselage body.

**7.**    The aircraft (100) of claim 1, further comprising fuel tanks (902) disposed in the wings (116, 118) and operatively coupled to the plurality of engines (132, 134).

**8.**    The aircraft (100) of claim 1, wherein the plurality of dual-purpose wings (116, 118)) consist of the first wing and the second wing; and the plurality of engines (132, 134) consist of the first engine and the second engine, both of which are provided with propellers (136, 138).

9. The aircraft (100) of claim 1, wherein the wing attachment assembly (108) is attached to the fuselage body (102) in an intermediate region thereof above the fuselage body.

10. A method of an aircraft (100) transitioning between fixed wing mode and for a rotor flight mode, in which the aircraft includes a fuselage body (102) defining a longitudinal axis (Af) and including a fuel tank (902); a wing attachment assembly (108) coupled to the fuselage body for rotation about an axis of rotation (Ar) transverse to the longitudinal axis (Af), a plurality of dual-purpose wings (116, 118), including a first wing and a second wing, rotatably mounted to said wing attachment assembly above the fuselage body, a plurality of engines secured to said wings, including a first engine (132) secured to an intermediate region of said first wing (116) and a second engine (134) secured to an intermediate region of said second wing (118), a central support to which the plurality of dual purpose wings attach, the central support (502) including a hopper tank for providing fuel to the plurality of engines (132, 134); the fuel tank (902) operatively coupled to the hopper tank to provide fuel thereto; the method comprising:

rotating to a transition orientation, in which each of the plurality of wings is rotated about a spanwise axis thereof, until each wing achieves the transition orientation, which is defined as aligning a wing's chord axis with the axis of rotation (Ar); and

rotating from the transition orientation, in which each of the plurality of wings is rotated about the spanwise axis thereof from the transition orientation until the plurality of wings are collectively oriented in the rotor flight mode or the fixed wing flight mode, in which the fixed wing flight mode is defined as flight in which said wings are maintained rotationally stationary relative to the axis of rotation (Ar) and the rotor flight mode is defined as flight in which said wings rotate about the axis of rotation (Ar) wherein the fuel is transferred from the fuel tank to the hopper tank when the wing rotation about the axis of rotation (Ar) is stopped.

11. The method of claim 10, wherein the wing attachment assembly (108) is attached to the fuselage body (102) in an intermediate region thereof above the fuselage body.


**Patentansprüche**

1. Flugzeug (100), das sowohl Starrflügel- als auch Rotorflugmodi ausführen kann, umfassend:

einen Rumpfkörper (102), der eine Längsachse (Af) definiert, wobei der Rumpfkörper eine Nase (204) und ein Heck (110) aufweist,

eine Flügelbefestigungsanordnung (108), die mit dem Rumpfkörper zur Drehung um eine Drehachse (Ar) quer zur Längsachse (Af) gekoppelt ist;

eine Vielzahl von Mehrzweckflügeln (116, 118), einschließlich eines ersten Flügels (116) und eines zweiten Flügels (118), die drehbar an der Flügelbefestigungsanordnung oberhalb des Rumpfkörpers für einen Starrflügelflugmodus und für einen Rotorflugmodus montiert sind, wobei der Starrflügelflugmodus als Flug definiert ist, bei dem die Flügel relativ zur Rotationsachse (Ar) rotierend stationär gehalten werden, und der Rotorflugmodus als Flug definiert ist, bei dem die Flügel um die Rotationsachse (Ar) rotieren; und

eine Vielzahl von Triebwerken, die an den Flügeln befestigt sind, darunter ein erstes Triebwerk (132), das an einem Zwischenbereich des ersten Flügels (116) befestigt ist, und ein zweites Triebwerk (134), das an einem Zwischenbereich des zweiten Flügels (118) befestigt ist;

wobei die Flügelbefestigungsanordnung (108) eine zentrale Stütze (502) umfasst, an der die Vielzahl von Mehrzweckflügeln (116, 118) befestigt ist;

wobei die zentrale Stütze (502) einen Trichtertank zur Versorgung der Vielzahl von Triebwerken (132, 134) mit Kraftstoff umfasst; wobei der Rumpfkörper (102) einen Kraftstofftank (902) umfasst, der betriebsmäßig mit dem Trichtertank verbunden ist, um diesen mit Kraftstoff zu versorgen; und

wobei das Flugzeug so konfiguriert ist, dass der Kraftstoff vom Kraftstofftank in den Trichtertank übertragen wird, wenn die Flügelrotation um die Rotationsachse (Ar) gestoppt wird.

2. Flugzeug (100) nach Anspruch 1, wobei die Vielzahl von Mehrzweckflügeln (116, 118) aus einem Flügelpaar besteht, das eine größere Spannweite als die Länge des Rumpfkörpers (102) aufweist.

3. Flugzeug (100) nach Anspruch 1, wobei die Flügelbefestigungsanordnung (108) in einem Zwischenbereich des Rumpfkörpers (102) so an diesem befestigt ist, dass sich im Rotorflugmodus die Vielzahl von Flügeln (116, 118) um die Rotationsachse (Ar) oberhalb der Nase (204) und des Hecks (110) des Rumpfkörpers dreht.

4. Flugzeug (100) nach Anspruch 1, wobei die Drehachse (Ar) senkrecht zur Längsachse (Af) verläuft.

5. Flugzeug (100) nach Anspruch 1, wobei die Vielzahl von Triebwerken (132, 134) jeweils an den Flügeln (116, 118) an einer Ausgleichsposition entlang der Halbspannweite jedes Flügels befestigt ist.

6. Flugzeug (100) nach Anspruch 1, wobei die Flügelbefestigungsanordnung (108) in einem Zwischenbereich oberhalb des Rumpfkörpers am Rumpfkörper (102) befestigt ist.

7. Flugzeug (100) nach Anspruch 1, das ferner Kraftstofftanks (902) umfasst, die in den Flügeln (116, 118) angeordnet und betriebsmäßig mit der Vielzahl von Triebwerken (132, 134) verbunden sind.

8. Flugzeug (100) nach Anspruch 1, wobei die Vielzahl von Mehrzweckflügeln (116, 118)) aus dem ersten Flügel und dem zweiten Flügel besteht; und die Vielzahl von Triebwerken (132, 134) aus dem ersten Triebwerk und dem zweiten Triebwerk besteht, die beide mit Propellern (136, 138) ausgestattet sind.

9. Flugzeug (100) nach Anspruch 1, wobei die Flügelbefestigungsanordnung (108) in einem Zwischenbereich oberhalb des Rumpfkörpers am Rumpfkörper (102) befestigt ist.

10. Verfahren zum Umschalten eines Flugzeugs (100) zwischen Starrflügelmodus und Rotorflugmodus, wobei das Flugzeug einen Rumpfkörper (102) umfasst, der eine Längsachse (Af) definiert und einen Kraftstofftank (902) umfasst; eine Flügelbefestigungsanordnung (108), die mit dem Rumpfkörper zur Drehung um eine Drehachse (Ar) quer zur Längsachse (Af) verbunden ist, eine Vielzahl von Mehrzweckflügeln (116, 118), einschließlich eines ersten Flügels und eines zweiten Flügels, die drehbar an der Flügelbefestigungsanordnung oberhalb des Rumpfkörpers montiert sind, eine Vielzahl von Triebwerken, die an den Flügeln befestigt sind, einschließlich eines ersten Triebwerks (132), der an einem Zwischenbereich des ersten Flügels (116) befestigt ist, und eines zweiten Triebwerks (134), der an einem Zwischenbereich des zweiten Flügels (118) befestigt ist, eine zentrale Stütze, an der die Vielzahl von Mehrzweckflügeln befestigt ist, wobei die zentrale Stütze (502) einen Trichtertank zur Versorgung der Vielzahl von Triebwerken (132, 134) mit Kraftstoff umfasst; der Kraftstofftank (902) betriebsmäßig mit dem Trichtertank verbunden ist, um diesen mit Kraftstoff zu versorgen; wobei das Verfahren Folgendes umfasst:

Drehen in eine Übergangsausrichtung, bei der jeder der Vielzahl von Flügeln um seine Spannweitenachse gedreht wird, bis jeder Flügel die Übergangsausrichtung erreicht, die als Ausrichten der Sehnenachse eines Flügels mit der Drehachse (Ar) definiert ist; und

Drehen aus der Übergangsausrichtung, in der jeder der Vielzahl von Flügeln aus der Übergangsausrichtung um seine Spannweitenachse gedreht wird, bis die Vielzahl von Flügeln gemeinsam im Rotorflugmodus oder im Starrflügelflugmodus ausgerichtet ist, wobei der Starrflügelflugmodus als Flug definiert ist, bei dem die Flügel relativ zur Drehachse (Ar) rotierend stationär gehalten werden, und der Rotorflugmodus als Flug definiert ist, bei dem die Flügel um die Drehachse (Ar) rotieren, wobei der Kraftstoff vom Kraftstofftank in den Trichtertank übertragen wird, wenn die Flügelrotation um die Drehachse (Ar) gestoppt wird.

11. Verfahren nach Anspruch 10, wobei die Flügelbefestigungsanordnung (108) in einem Zwischenbereich oberhalb des Rumpfkörpers am Rumpfkörper (102) befestigt wird.

**Revendications**

1. Aéronef (100) capable d'assurer des modes de vol à voilure fixe et à voilure tournante, comprenant :

un corps de fuselage (102) définissant un axe longitudinal (Af), le corps de fuselage ayant un nez (204) et une queue (110),
un ensemble de fixation d'aile (108) couplé au corps de fuselage pour une rotation autour d'un axe de rotation (Ar) transversal à l'axe longitudinal (Af) ;
une pluralité d'ailes à double usage (116, 118), comportant une première aile (116) et une seconde aile (118), montées de manière rotative sur ledit ensemble de fixation d'aile au-dessus du corps de fuselage pour un mode de vol à voilure fixe et pour un mode de vol à voilure tournante, dans lequel le mode de vol à voilure fixe est défini comme un vol dans lequel lesdites ailes sont maintenues stationnaires en rotation par rapport à l'axe de rotation (Ar) et le mode de vol à voilure tournante est défini comme un vol dans lequel lesdites ailes tournent autour de l'axe de rotation (Ar) ; et

une pluralité de moteurs fixés auxdites ailes, comportant un premier moteur (132) fixé à une région intermédiaire de ladite première aile (116) et un second moteur (134) fixé à une région intermédiaire de ladite seconde aile (118) ;

dans lequel l'ensemble de fixation d'aile (108) comprend un support central (502) auquel la pluralité d'ailes à double usage (116, 118) est fixée ;

dans lequel le support central (502) comporte une nourrice pour fournir du carburant à la pluralité de moteurs (132, 134) ; dans lequel le corps de fuselage (102) comporte un réservoir de carburant (902) couplé de manière fonctionnelle à la nourrice pour lui fournir du carburant ; et

dans lequel l'aéronef est configuré de telle sorte que le carburant est transféré du réservoir de carburant à la nourrice lorsque la rotation d'aile autour de l'axe de rotation (Ar) est arrêtée.

2.  Aéronef (100) selon la revendication 1, dans lequel la pluralité d'ailes à double usage (116, 118) est constituée d'une paire d'ailes ayant une envergure supérieure à la longueur du corps de fuselage (102).

3.  Aéronef (100) selon la revendication 1, dans lequel l'ensemble de fixation d'aile (108) est fixé au corps de fuselage (102) dans une région intermédiaire de celui-ci, de telle sorte qu'en mode de vol à voilure tournante, la pluralité d'ailes (116, 118) tourne autour de l'axe de rotation (Ar) au-dessus du nez (204) et de la queue (110) du corps de fuselage.

4.  Aéronef (100) selon la revendication 1, dans lequel l'axe de rotation (Ar) est perpendiculaire à l'axe longitudinal (Af).

5.  Aéronef (100) selon la revendication 1, dans lequel la pluralité de moteurs (132, 134) sont fixés chacun auxdites ailes (116, 118) dans une position d'égalisation le long de la demi-envergure de chaque aile.

6.  Aéronef (100) selon la revendication 1, dans lequel l'ensemble de fixation d'aile (108) est fixé au corps de fuselage (102) dans une région intermédiaire de celui-ci au-dessus du corps de fuselage.

7.  Aéronef (100) selon la revendication 1, comprenant en outre des réservoirs de carburant (902) disposés dans les ailes (116, 118) et couplés de manière fonctionnelle à la pluralité de moteurs (132, 134).

8.  Aéronef (100) selon la revendication 1, dans lequel la pluralité d'ailes à double usage (116, 118)) est constituée de la première aile et de la seconde aile ; et la pluralité de moteurs (132, 134) est constituée du premier moteur et du second moteur, tous deux pourvus d'hélices (136, 138).

9.  Aéronef (100) selon la revendication 1, dans lequel l'ensemble de fixation d'aile (108) est fixé au corps de fuselage (102) dans une région intermédiaire de celui-ci au-dessus du corps de fuselage.

10. Procédé de transition d'un aéronef (100) entre un mode à voilure fixe et un mode de vol à voilure tournante, dans lequel l'aéronef comporte un corps de fuselage (102) définissant un axe longitudinal (Af) et comportant un réservoir de carburant (902) ; un ensemble de fixation d'aile (108) couplé au corps de fuselage pour une rotation autour d'un axe de rotation (Ar) transversal à l'axe longitudinal (Af), une pluralité d'ailes à double usage (116, 118), comportant une première aile et une seconde aile, montées de manière rotative sur ledit ensemble de fixation d'aile au-dessus du corps de fuselage, une pluralité de moteurs fixés auxdites ailes, comportant un premier moteur (132) fixé à une région intermédiaire de ladite première aile (116) et un second moteur (134) fixé à une région intermédiaire de ladite seconde aile (118), un support central auquel la pluralité d'ailes à double usage est fixée, le support central (502) comportant une nourrice pour fournir du carburant à la pluralité de moteurs (132, 134) ; le réservoir de carburant (902) étant couplé de manière fonctionnelle à la nourrice pour lui fournir du carburant ; le procédé comprenant :

la rotation vers une orientation de transition, dans laquelle chacune de la pluralité d'ailes est tournée autour de son axe d'envergure, jusqu'à ce que chaque aile atteigne l'orientation de transition, définie comme un alignement d'un axe de corde d'une aile avec l'axe de rotation (Ar) ; et

la rotation à partir de l'orientation de transition, dans laquelle chacune de la pluralité d'ailes est tournée autour de son axe d'envergure à partir de l'orientation de transition, jusqu'à ce que la pluralité d'ailes soit collectivement orientée dans le mode de vol à voilure tournante ou le mode de vol à voilure fixe, dans lequel le mode de vol à voilure fixe est défini comme un vol dans lequel lesdites ailes sont maintenues stationnaires en rotation par rapport à l'axe de rotation (Ar) et le mode de vol à voilure tournante est défini comme un vol dans lequel lesdites ailes tournent autour de l'axe de rotation (Ar), dans lequel le carburant est transféré du réservoir de carburant à la nourrice lorsque la rotation d'aile autour de l'axe de rotation (Ar) est arrêtée.

**11.** Procédé selon la revendication 10, dans lequel l'ensemble de fixation d'aile (108) est fixé au corps de fuselage (102) dans une région intermédiaire de celui-ci au-dessus du corps de fuselage.

FIG. 1

FIG. 2

FIG. 3

FIG. 4

**FIG. 5**

**FIG. 6**

**FIG. 7**

**FIG. 8**

**FIG. 9A**

**FIG. 9B**

**FIG. 10A**

**FIG. 10B**

**FIG. 11A**

**FIG. 11B**

**FIG. 11C**

**FIG. 11D**

**FIG. 11E**

**EP 3 609 783 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62474858
- WO 2016109408 A1
- US 20120248259 A1